# FASCICULE DE BREVET EUROPEEN

(11) **EP 1 535 804 B1**
(45) Date de publication et mention de la délivrance du brevet: **12.01.2011**
(21) Numéro de dépôt: 04292790.5
(22) Date de dépôt: 26.11.2004
(51) Int. Cl.: B60R 19/26, B60R 19/34, B62D 21/15

(54) **Dispositif contre les chocs pour véhicule automobile comprenant des éléments amortisseurs de chocs**
Aufprallschutzvorrichtung mit stossdämpfenden Bauelementen für Kraftfahrzeuge
Impact protection device with shock absorbing members for motor vehicles

(30) Priorité: 28.11.2003 FR 0314036
(43) Date de publication de la demande: 01.06.2005
(73) Titulaire: Valeo Systèmes Thermiques, 78321 Le Mesnil Saint-Denis (FR)
(72) Inventeur: Guinehut, Sébastien, 75013 Paris (FR)
(74) Mandataire: Rolland, Jean-Christophe

(56) Documents cités:
- EP-A- 1 256 510
- DE-A- 19 615 875
- DE-C- 19 611 934
- FR-A- 2 607 082
- FR-A- 2 810 940
- US-A- 3 694 018

## Description

L'invention se rapporte à un dispositif contre les chocs pour un véhicule automobile et plus particulièrement à un dispositif capable d'amortir les chocs frontaux auxquels le véhicule peut être soumis.

Pour encaisser, au moins en partie, les chocs frontaux, il est habituel de munir la partie avant du véhicule automobile d'une poutre pare-chocs, généralement réalisée sous forme d'un profilé métallique fermé de section rectangulaire ou ouvert de section en U ou en C et destinée à supporter un pare-chocs en matière synthétique.

Le plus souvent, la poutre pare-chocs est fixée, directement ou indirectement, aux extrémités de deux longerons inférieurs appelés également longerons principaux, qui sont des éléments de la structure du véhicule situés dans sa longueur.

Les véhicules automobiles devant répondre à des normes relatives à l'encaissement des chocs frontaux toujours plus strictes, les constructeurs automobiles ainsi que les équipementiers cherchent à améliorer l'amortissement réalisé par les éléments placés à l'avant du véhicule automobile.

Ainsi, il est connu, notamment du document FR 2 805 504, d'inclure, par exemple entre les extrémités des longerons inférieurs et la poutre pare-chocs, des éléments amortisseurs de chocs sous forme de pièces mécaniques dont la déformation est capable de dissiper une partie de l'énergie d'un choc frontal.

Il existe de nombreuses réalisations d'éléments amortisseurs de chocs, également désignés par le terme anglais de "crash-box".

Par exemple, le document FR 2 837 762 décrit un boîtier amortisseur intégré à une poutre pare-chocs qui comprend une enveloppe garnie d'une mousse métallique ayant des propriétés d'absorption d'énergie.

Le document FR 2 607 082 divulgue un dispositif contre les chocs pour véhicule automobile comprenant au moins une poutre pare-chocs agencée pour être fixée à la structure du véhicule par l'intermédiaire d'éléments amortisseurs de chocs, le dispositif comprenant un ensemble constituant une unité et comprenant un élément amortisseur de chocs supérieur et un élément amortisseur de chocs inférieur.

L'invention a pour objectif d'améliorer l'amortissement des chocs frontaux en proposant un dispositif contre les chocs pour véhicule automobile possédant une architecture à double brancards comprenant une structure munie de deux voie hautes et de deux voies basses, ledit dispositif comprenant au moins une poutre pare-chocs agencée pour être fixée à la structure du véhicule par l'intermédiaire d'éléments amortisseurs de chocs, et dans lequel :
- les éléments amortisseurs de chocs sont répartis en deux ensembles agencés pour être fixés respectivement du côté droit et du côté gauche de la structure, chaque ensemble étant destiné à être reçu d'une part par l'extrémité avant d'une desdites voies hautes et d'autre part par l'extrémité d'une desdites voie basse située au-dessous.
- chaque ensemble constitue une seule unité comprenant un élément amortisseur de chocs supérieur et un élément amortisseur de chocs inférieur, et
- les éléments amortisseurs d'un même ensemble sont réunis solidaires entre-eux par au moins une plaque de liaison, ladite plaque de liaison comportant une première partie apte à être en appui sur l'extrémité d'une voie haute et une seconde partie apte à être en appui sur l'extrémité d'une voie basse située en dessous de ladite voie haute.

Le fait que les éléments amortisseurs d'un même ensemble sont réunis solidaires entre-eux par au moins une plaque de liaison permet de lier les éléments amortisseurs d'un même ensemble pour les faire coopérer.

L'avant du véhicule automobile ainsi doté de quatre éléments amortisseurs de chocs présente de meilleures capacités d'amortissement des chocs frontaux, notamment par la présence de quatre points d'absorption d'énergie.

La présence de quatre éléments amortisseurs de chocs permet également de réduire les dimensions individuelles desdits éléments tout en absorbant la même quantité d'énergie et ainsi de réduire l'encombrement global du dispositif selon l'invention.

De manière préférentielle, l'élément amortisseur de chocs supérieur et l'élément amortisseur de chocs inférieur d'un même ensemble sont disposés sensiblement superposés verticalement.

Dans une forme de réalisation, les éléments amortisseurs sont fixés sur la plaque de liaison, par exemple soudés, ce qui permet d'utiliser des éléments amortisseurs de type déjà existant.

Dans une autre forme de réalisation, les éléments amortisseurs de chocs et la plaque de liaison sont formés d'une seule pièce, réalisée avantageusement par extrusion, par exemple sous la forme d'une plaque support sur laquelle sont disposés au moins deux profilés parallèles entre eux suivant la longueur de la plaque. Ceci offre un procédé de réalisation économique notamment pour la production en grande série. Dans cette forme de réalisation, la pièce peut être aussi réalisée par emboutissage.

De préférence, les éléments amortisseurs de chocs sont des profilés, notamment des profilés de section carrée et sont réalisés en acier ou en aluminium.

Dans une forme de réalisation avantageuse, une première poutre pare-chocs est fixée à la structure par l'intermédiaire des éléments amortisseurs supérieurs, tandis qu'une seconde poutre pare-chocs est fixée à la structure par l'intermédiaire des éléments amortisseurs inférieurs. Ce faisant, lorsque les éléments amortisseur de chocs sont liés par une plaque de liaison, les deux poutres et les éléments amortisseurs de chocs présentent une structure en forme de cage, ce qui offre un meilleur comportement dans le cas de chocs frontaux.

Dans une autre forme de réalisation, une unique poutre pare-chocs est fixée à la structure par l'intermédiaire des éléments amortisseurs inférieurs d'une part et des éléments amortisseurs supérieurs d'autre part.

De préférence, les éléments amortisseurs de chocs comprennent un espace intérieur cloisonné, offrant ainsi un meilleur amortissement des chocs.

Dans une forme de réalisation, chaque ensemble comprend en outre un élément amortisseur de chocs intermédiaire disposé entre l'élément amortisseur de chocs supérieur et l'élément amortisseur de chocs inférieur.

D'autres caractéristiques et avantages de l'invention apparaîtront à l'examen de la description détaillée ci-après, et des dessins annexés, sur lesquels :
- les figures 1 et 2 sont des vues, respectivement de face et de côté, des éléments de structure de l'avant d'un véhicule automobile schématisés,
- les figures 2 à 5 sont des vues en perspective d'éléments amortisseurs de chocs selon différents modes de réalisation schématisés,
- les figures 7 à 11 sont des vues de côté du dispositif selon l'invention dans différentes configurations schématisé, et
- les figures 12 à 15 sont des vues équivalentes respectivement des figures ' 4, 6, 10 et 11 pour un mode de réalisation particulier de l'invention.

Les dessins annexés pourront non seulement servir à compléter l'invention, mais aussi contribuer à sa définition, le cas échéant.

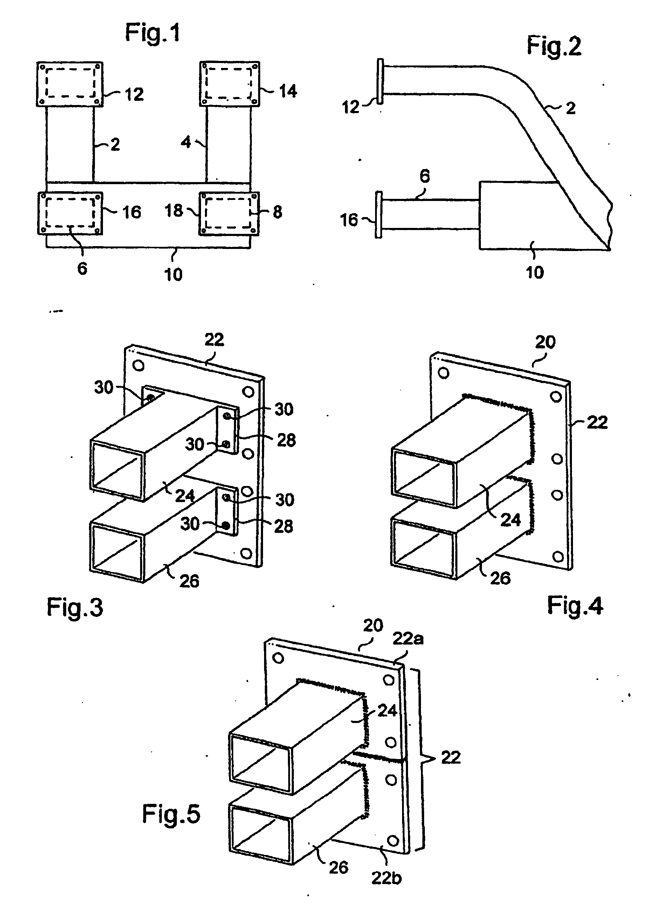

Les figures 1 et 2 représentent, de manière schématique, une partie de la structure avant d'un véhicule automobile, laquelle comprend de manière classique deux voies hautes 2 et 4 sous forme de poutres métalliques également désignées par le terme de longerons inférieurs ou encore longerons principaux.

En plus des deux longerons inférieurs 2 et 4, le véhicule automobile illustré par la figure 1 est pourvu de deux béquilles 6 et 8, également appelées voies basses, sous forme de poutres métalliques alignées verticalement aux longerons inférieurs, qui prennent appui par exemple sur le berceau moteur 10.

Ce type de véhicule, présentant deux voies hautes 2,4 et deux voies basses 6,8, est désigné comme possédant une architecture à double brancards ou encore à double voie. Cette structure de véhicule est de plus en plus répandue chez les constructeurs automobiles, notamment parce qu'elle rend le véhicule plus sûr lors de chocs frontaux et offre la possibilité d'installer une poutre pare-chocs supplémentaire prenant appui sur les voies basses, comme décrit plus loin.

Les extrémités avant des longerons inférieurs 2 et 4 sont pourvues de platines de fixation, respectivement 12 et 14, sous forme de plaques métalliques découpées et percées, destinées à recevoir des éléments amortisseurs de chocs, lesquels sont fixés de manière classique, par exemple par des éléments de visserie.

De façon similaire, les extrémités non fixées au berceau moteur 10 des béquilles 6 et 8, présentent elles aussi des platines de fixation 16 et 18 respectivement, du type précité. Les extrémités 12 et 14 des longerons inférieurs 2 et 4 sont respectivement alignées aux extrémités 16 et 18 des béquilles 6 et 8.

La figure 3 illustre un double amortisseur de chocs 20, destiné à être reçu d'une part par l'extrémité avant du longeron inférieur 12 et d'autre part par l'extrémité de la béquille située au-dessous 16. Il est entendu que de manière symétrique l'extrémité avant du longeron inférieur 14 et l'extrémité libre de la béquille située en-dessous 18 reçoivent également un double amortisseur de chocs 20. Le double amortisseur de chocs 20 comprend une plaque de liaison 22 laquelle accueille deux éléments amortisseurs de chocs 24 et 26, autrement dit, la plaque de liaison 22 rend solidaire lesdits éléments 24 et 26 pour former un tout unitaire. Une fois reçu sur la structure avant du véhicule, l'élément amortisseur de chocs supérieur 24 est dans le prolongement du longeron inférieur 12 et l'élément amortisseur de chocs 26 dans celui de la béquille 6.

Les éléments amortisseurs de chocs supérieur 24 et inférieur 26 présentent une forme de parallélépipède droit et sont disposés faisant saillie suivant leur longueur perpendiculairement à la plaque de liaison 22, une face du parallélépipède venant en appui sur la plaque de liaison 22.

Les éléments amortisseurs de chocs 24 et 26 sont généralement creux et peuvent être remplis de mousses métalliques ou encore présenter des cloisons métalliques destinées à améliorer leur comportement face aux chocs.

Dans un mode de réalisation, représenté schématiquement sur la figure 3, les éléments amortisseurs de chocs 24 et 26 sont munis de pattes de fixation 28, lesquelles viennent en appui sur la plaque de liaison 22. La fixation des éléments amortisseurs de chocs 24 et 26 se fait par l'intermédiaire d'éléments de visserie 30, par exemple des couples vis/écrous.

Pour assurer le maintien du double amortisseur de chocs 20 sur les extrémités des longerons et des béquilles superposées, par exemple 12 et 16, la plaque de liaison 22 est percée de trous, lesquels viennent coïncider avec les trous des platines de fixation 12 ou 14 des longerons inférieurs d'une part et avec les trous des platines de fixation 16 et 18 des béquilles d'autre part, et sont destinés à accueillir des éléments de visserie non représenté car connus de l'homme du métier.

Dans un second mode de réalisation, illustré sur la figure 4, les éléments amortisseurs de chocs supérieur 24 et inférieur 26 sont soudés à même la plaque de liaison 22. Dans ce mode de réalisation, les éléments amortisseurs de chocs 24 et 26 peuvent également présenter des pattes de fixation comme décrit précédemment pour faciliter l'opération de soudure.

Dans un autre mode de réalisation encore, illustré par la figure 5, les éléments amortisseurs de chocs supérieur 24 et inférieur 26 sont soudés sur des plaques individuelles supérieure 22a et inférieure 22b, lesquelles sont ensuite assemblées par soudage pour former la plaque de liaison 22.

De façon préférentielle, dans les modes de réalisation décrits ci-dessus, les éléments amortisseurs de chocs 24 et 26 ainsi que la plaque de liaison 22 sont réalisés en acier.

Dans un mode de réalisation préféré les éléments amortisseurs de chocs 24 et 26 sont réalisés sous forme de profilés, notamment de section carré, rectangulaire, hexagonale ou cylindrique. Dans ce cas, les éléments amortisseurs de chocs sont disposés, en général, de telle sorte que la direction d'extrusion des profilés coïncide avec la direction d'un choc frontal. Les éléments amortisseurs de chocs se déforment alors suivant leur direction d'extrusion.

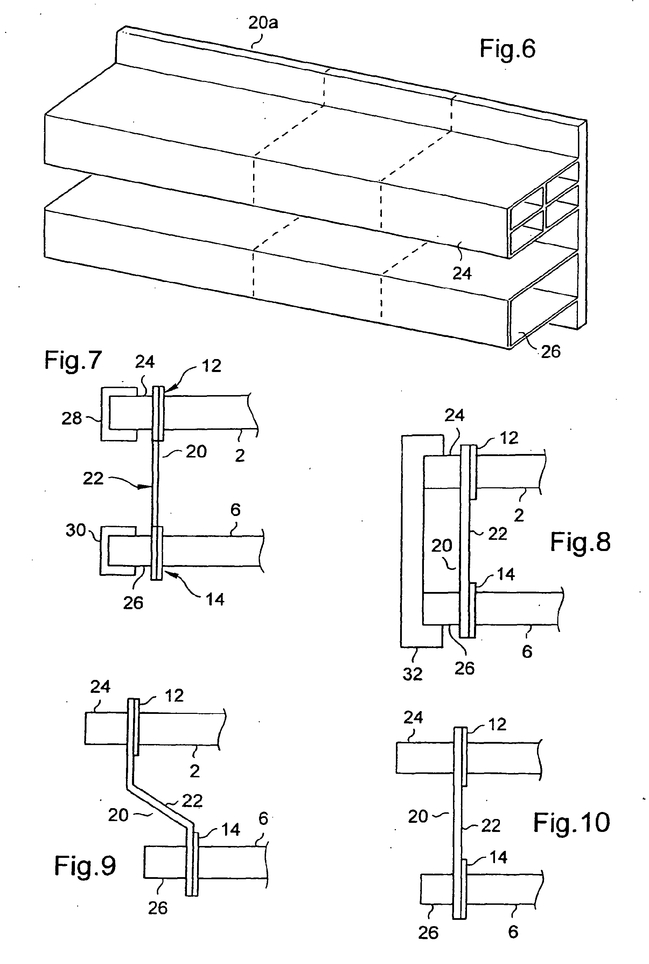

Dans un cas particulier du mode de réalisation décrit ci-dessus, les éléments amortisseurs de chocs 24 et 26 peuvent être réalisés d'une seule pièce avec la plaque de liaison 22, comme illustré sur la figure 6. Il est possible de réaliser un extrudé 20a dont la section correspond à la réunion des sections des éléments amortisseurs de chocs 24,26 et de la plaque 22. L'extrudé 20a est tronçonné transversalement à la longueur désirée pour former un double amortisseur de chocs 20, comme indiqué par les pointillés sur la figure 5. On réalise par la suite les perçages nécessaires au passage des éléments de fixation non représentés ici. Dans ce mode de réalisation, les éléments amortisseurs 24,26 et la plaque de liaison 22 sont de préférence prévus en aluminium. Dans ce cas particulier, et comme l'indique la figure 6, les éléments amortisseurs de chocs sont disposés de telle sorte que la direction d'extrusion du profilé 20a est perpendiculaire à la direction d'un choc frontal. Dans se cas, les éléments amortisseurs de chocs se déforment transversalement à leur direction d'extrusion.

Dans un autre mode de réalisation, les éléments amortisseurs de chocs 24 et 26 sont réalisés d'une seule pièce avec la plaque de liaison par emboutissage.

Dans une configuration de l'invention, représentée schématiquement sur la figure 7, il est prévu une première poutre pare-chocs 28 sous forme d'un profilé ouvert de section en U ou en C qui vient prendre appui sur les éléments amortisseurs de chocs supérieurs 24, fixés aux extrémités 12 et 14 des longerons inférieurs 2 et 4. Une seconde poutre pare-chocs 30, semblable à la première poutre pare-chocs 28, prend elle appui sur les éléments amortisseurs de chocs inférieurs 26 situés aux extrémités libres des béquilles 6 et 8. Il est à noté que la taille, le matériau, la section ou encore l'épaisseur peuvent différer entre la première poutre pare-chocs 28 et la seconde poutre pare-chocs 30.

Dans ce mode de réalisation, la première poutre pare-chocs 28 est en général désignée par le terme de poutre "Danner" tandis que la seconde poutre pare-chocs 30 est appelée poutre "piéton". Cette dernière, généralement destinée à un choc frontal avec un piéton, peut aussi participer aux chocs "Danner". Dans ce cas, l'invention permet d'avoir une poutre piéton amortie et de manière indépendante de la poutre "Danner", ce qui offre la possibilité par exemple de ne changer que l'un de ces deux éléments après un choc. Enfin, chaque élément amortisseur de chocs supérieur étant mécaniquement lié à l'élément amortisseur de chocs inférieur correspondant par la plaque de liaison 22, l'invention prévoit une liaison mécanique entre chaque voie basse et chaque voie haute. De fait, l'avant du véhicule présente une structure en forme de cage, plus performante dans l'amortissement des chocs frontaux, notamment à grande vitesse.

Une autre configuration de l'invention est représentée de manière schématique sur la figure 8, qui prévoit une unique poutre pare-chocs 32 ou poutre "Danner" venant coiffer les éléments amortisseurs de chocs supérieurs 24 et inférieurs 26. En présentant quatre éléments amortisseurs de chocs pour une même poutre pare-chocs 32, l'invention permet de réduire les dimensions des éléments amortisseurs, notamment la longueur, par rapport à la configuration de l'art antérieur, laquelle ne prévoyait que deux éléments amortisseurs de chocs. De plus, cette configuration réduit le porte-à-faux puisqu'elle offre à la poutre pare-chocs 32 quatre appuis.

Dans tous les modes de réalisation et configurations décrits précédemment, les éléments amortisseurs de chocs supérieurs 24 et inférieurs 26 ont été considérés comme identiques. Bien entendu, ils peuvent également être prévus différents. Ainsi la figure 10 illustre une configuration dans laquelle les éléments amortisseurs de chocs inférieurs sont de moindre longueur que les éléments amortisseurs de chocs supérieurs. Cette configuration est par exemple adaptée au cas où l'on désire une poutre piéton en retrait par rapport à la poutre "Danner".

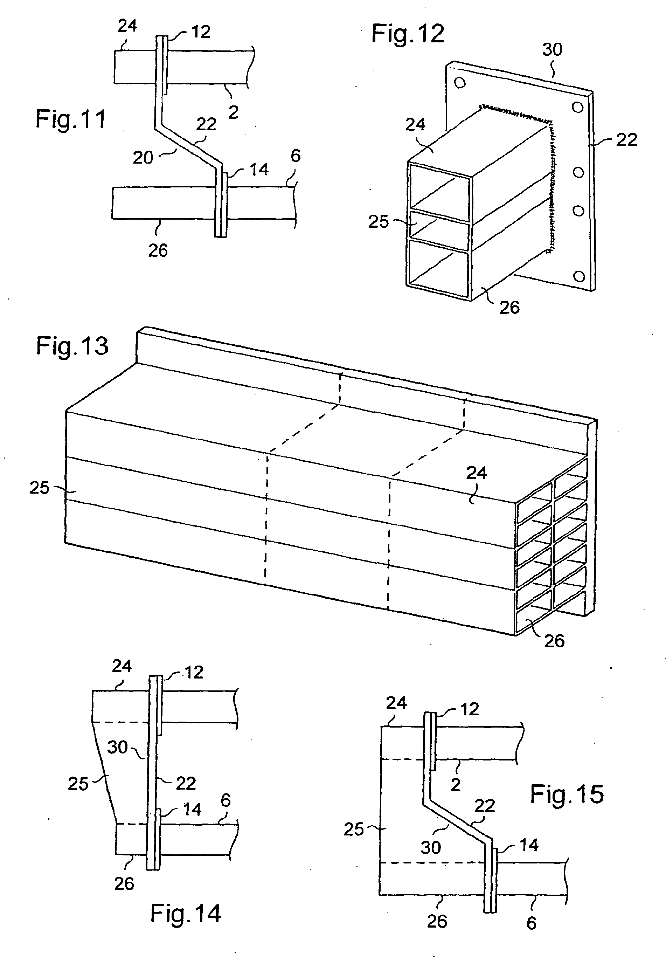

Dans le cas où les extrémités des béquilles 6 et 8 sont en retrait des extrémités des longerons inférieurs 2 et 4, il est généralement prévu une plaque de liaison 22 dont la partie centrale inclinée permet de joindre une première partie en appui sur l'extrémité des longerons inférieurs 2 et une seconde partie en appui sur les extrémités des béquilles 6 comme illustré sur les figures 9 et 11. Dans ce cas, et lorsqu'il est souhaitable que les extrémités des éléments amortisseurs de chocs supérieurs 24 et inférieurs 26 se superposent, par exemple pour y fixer une poutre commune non représentée, il peut être utile de prévoir des éléments amortisseurs de longueurs différentes.

Dans une variante de l'invention, le double amortisseur de chocs 20 décrit plus haut peut être muni d'un élément amortisseur de chocs intermédiaire 25, disposé entre l'élément amortisseur de chocs supérieur 24 et l'élément amortisseur de chocs inférieur 26 pour former un triple amortisseur de chocs 30, illustré par la figure 12.

L'élément amortisseur de chocs intermédiaire 25 peut être identique aux éléments amortisseurs de chocs supérieur 24 et inférieur 26 et se présenter sous la forme d'un parallélépipède droit comme illustré sur la figure 12. Bien entendu, la fixation de l'élément amortisseur de chocs intermédiaire 25 sur la plaque de liaison 22 est identique à celle des éléments amortisseurs de chocs supérieur 24 et inférieur 26. Ainsi, l'élément amortisseur de chocs intermédiaire 25 peut être vissé sur la plaque de liaison 22 ou encore soudé comme illustré sur la figure 12.

L'élément amortisseur de chocs 25 peut être lui aussi réalisé en acier ou en aluminium.

Dans le cas décrit plus haut où les éléments amortisseurs de chocs supérieur 26 et inférieur 24 sont réalisés sous forme de profilés, l'élément amortisseur de chocs intermédiaire 25 est réalisé de manière identique.

Dans un cas particulier illustré par la figure 13, les éléments amortisseurs de chocs supérieur 24, intermédiaire 25 et inférieur 26 peuvent être réalisés d'une seule pièce avec la plaque de liaison 22, de manière similaire à ce qui a été décrit plus haut, par extrusion. Dans un autre mode réalisation les éléments amortisseurs de chocs supérieur 24, intermédiaire 25 et inférieur 26 sont réalisés d'une seule pièce avec la plaque de liaison 22 par emboutissage.

Dans une configuration particulière du triple amortisseur de chocs 30, illustrée par la figure 14, l'élément amortisseur de chocs intermédiaire 25 peut présenter, une extrémité libre inclinée (figure 14) lorsque les éléments amortisseurs de chocs supérieur 24 et inférieur 26 sont de longueurs différentes et que la plaque de liaison 22 est plane. Dans une autre configuration particulière, illustrée de manière schématique sur la figure 15, lorsque la plaque de liaison 22 présente une partie inclinée entre les parties recevant les éléments amortisseurs de chocs supérieur 24 et inférieur 26, l'extrémité de l'élément amortisseur de chocs intermédiaire 25 venant en appui sur la plaque de liaison 22 présente une forme complémentaire, de sorte que les extrémités libres des éléments amortisseurs de chocs supérieur 24, intermédiaire 25 et inférieur 26 sont coplanaires.

Bien qu'il ait été décrit ci-dessus des éléments amortisseurs de chocs en forme de parallélépipède, l'invention peut être mise en oeuvre avec des éléments amortisseurs de types différents.

La mise en place des doubles amortisseurs de chocs sur les longerons et béquilles a été décrite de manière générale pour mieux faire ressortir l'invention. Cependant, il est à noter que peut être intercalé entre les plaques de liaison et les longerons un élément destiné à la fixation d'une face avant d'automobile, non représentée car connu de l'homme du métier.

L'invention ne se limite pas aux modes de réalisation décrits ci-avant, seulement à titre d'exemple, mais elle englobe toutes les variantes que pourra envisager l'homme de l'art dans le cadre des revendications ci-après.

## Revendications

1. Dispositif contre les chocs pour véhicule automobile possédant une architecture à double brancards comprenant une structure munie de deux voie hautes (2 ; 4) et de deux voies basses (6 ; 8), ledit dispositif comprenant au moins une poutre pare-chocs (28,30,32) agencée pour être fixée à la structure du véhicule par l'intermédiaire d'éléments amortisseurs de chocs (24,26), et dans lequel :
- les éléments amortisseurs de chocs (24,26) sont répartis en deux ensembles (20) agencés pour être fixés respectivement du côté droit et du côté gauche de la structure, chaque ensemble étant destiné à être reçu d'une part par l'extrémité avant d'une desdites voies hautes (2, 4) et d'autre part par l'extrémité d'une desdites voie basse (6, 8) située au-dessous,
- chaque ensemble (20) constitue une seule unité comprenant un élément amortisseur de chocs supérieur (24) et un élément amortisseur de chocs inférieur (26), et
- les éléments amortisseurs (24,26) d'un même ensemble (20) sont réunis solidaires entre-eux par au moins une plaque de liaison (22), ladite plaque de liaison comportant une première partie apte à être en appui sur l'extrémité d'une voie haute et une seconde partie apte à être en appui sur l'extrémité d'une voie basse située en dessous de ladite voie haute.

2. Dispositif selon la revendication 1, **caractérisé en ce que** l'élément amortisseur de chocs supérieur (24) et l'élément amortisseur de chocs inférieur (26) d'un même ensemble (2C) sont disposés sensiblement superposés verticalement.

3. Dispositif selon la revendication 2, **caractérisé en ce que** les éléments amortisseurs (24,26) sont fixés sur la plaque de liaison (22).

4. Dispositif selon la revendication 3, **caractérisé en ce que** les éléments amortisseurs (24,26) sont soudés à la plaque de liaison (22).

5. Dispositif selon la revendication 2, **caractérisé en ce que** les éléments amortisseurs (24,26) et la plaque de liaison (22) sont formés d'une seule pièce.

6. Dispositif selon la revendication 5, **caractérisé en ce que** ladite pièce est réalisée par extrusion.

7. Dispositif selon la revendication 6, **caractérisé en ce que** la pièce est extrudée sous la forme d'une plaque support sur laquelle sont disposés au moins deux profilés parallèles entre-eux suivant la longueur de la plaque.

8. Dispositif selon la revendication 5, **caractérisé en ce que** ladite pièce est réalisée par emboutissage.

9. Dispositif selon l'une des revendications précédentes, **caractérisé en ce que** les éléments amortisseurs de chocs (24,26) sont des profilés, notamment de section carrée.

10. Dispositif selon l'une des revendications précédentes, **caractérisé en ce que** les éléments amortisseurs sont réalisés en acier.

11. Dispositif selon l'une des revendications 1 à 9, **caractérisé en ce que** les éléments amortisseurs sont réalisés en aluminium.

12. Dispositif selon l'une des revendications précédentes, **caractérisé en ce qu'**une première poutre (28) pare-chocs est fixée à la structure par l'intermédiaire des éléments amortisseurs supérieurs (24) tandis qu'une seconde poutre pare-chocs (30) est fixée à la structure par l'intermédiaire des éléments amortisseurs inférieurs (26).

13. Dispositif selon l'une des revendications 1 à 11, **caractérisé en ce que** une unique poutre pare-chocs (32) est fixée à la structure par l'intermédiaire des éléments amortisseurs inférieurs (26) d'une part et des éléments amortisseurs supérieurs (24) d'autre part.

14. Dispositif selon l'une des revendications précédentes, **caractérisé en ce que** les éléments amortisseurs (24,26) de chocs comprennent un espace intérieur cloisonné.

15. Dispositif selon l'une des revendications précédentes, **caractérisé en ce que** chaque ensemble (20) comprend en outre un élément amortisseur de chocs intermédiaire (25) disposé entre l'élément amortisseur de chocs supérieur (24) et l'élément amortisseur de chocs inférieur (26).

## Claims

1. Impact protection device for motor vehicles having a twin-stretcher architecture comprising a structure provided with two high channels (2; 4) and two low channels (6; 8), said device comprising at least one impact prevention beam (28, 30, 32) arranged to be fixed to the structure of the vehicle via shock-absorbing elements (24, 26), and in which:
- the shock-absorbing elements (24, 26) are divided into two sets (20) arranged to be fixed respectively on the right side and on the left side of the structure, each set being intended to be received on the one hand by the front end of one of said high channels (2, 4) and on the other hand by the end of one of said low channels (6, 8) situated below,
- each set (20) constitutes a single unit comprising an upper shock absorbing element (24) and a lower shock absorbing element (26), and
- the absorbing elements (24, 26) of one and the same set (20) are solidly joined to one another by at least one link plate (22), said link plate having a first portion that is able to bear on the end of a high channel and a second portion that is able to bear on the end of a low channel situated below said high channel.

2. Device according to Claim 1, **characterized in that** the upper shock absorbing element (24) and the lower shock absorbing element (26) of one and the same set (20) are arranged substantially superposed vertically.

3. Device according to Claim 2, **characterized in that** the absorbing elements (24, 26) are fixed to the link plate (22).

4. Device according to Claim 3, **characterized in that** the absorbing elements (24, 26) are welded to the link plate (22).

5. Device according to Claim 2, **characterized in that** the absorbing elements (24, 26) and the link plate (22) are formed from a single piece.

6. Device according to Claim 5, **characterized in that** said piece is produced by extrusion.

7. Device according to Claim 6, **characterized in that** the piece is extruded in the form of a support plate on which are arranged at least two mutually parallel sectional members along the length of the plate.

8. Device according to Claim 5, **characterized in that** said piece is produced by stamping.

9. Device according to one of the preceding claims, **characterized in that** the shock absorbing elements (24, 26) are sectional members, notably of square section.

10. Device according to one of the preceding claims, **characterized in that** the absorbing elements are made of steel.

11. Device according to one of Claims 1 to 9, **characterized in that** the absorbing elements are made of aluminium.

12. Device according to one of the preceding claims, **characterized in that** a first impact prevention beam (28) is fixed to the structure via the upper absorbing elements (24) while a second impact prevention beam (30) is fixed to the structure via the lower absorbing elements (26).

13. Device according to one of Claims 1 to 11, **characterized in that** a single impact prevention beam (32) is fixed to the structure via the lower absorbing elements (26) on the one hand and the upper absorbing elements (24) on the other hand.

14. Device according to one of the preceding claims, **characterized in that** the shock absorbing elements (24, 26) include a partitioned internal space.

15. Device according to one of the preceding claims, **characterized in that** each set (20) also comprises an intermediate shock absorbing element (25) arranged between the upper shock absorbing element (24) and the lower shock absorbing element (26).

## Patentansprüche

1. Aufprallschutzvorrichtung für ein Kraftfahrzeug, das einen Aufbau mit doppelten Längsträgern besitzt, mit einer Struktur, die mit zwei oberen Trägern (2; 4) und mit zwei untere Trägern (6; 8) versehen ist, wobei die Vorrichtung mindestens einen Stoßstangenbalken (28, 30, 32) enthält, der eingerichtet ist, um über Stoßdämpfungselemente (24, 26) an der Struktur des Fahrzeugs befestigt zu werden, und bei der:
- die Stoßdämpfungselemente (24, 26) auf zwei Baueinheiten (20) aufgeteilt sind, die eingerichtet sind, um auf der rechten bzw. der linken Seite der Struktur befestigt zu werden, wobei jede Baueinheit dazu bestimmt ist, einerseits vom vorderen Ende eines der oberen Träger (2, 4) und andererseits vom Ende eines der unteren Träger (6, 8) aufgenommen zu werden, die sich darunter befinden,
- jede Baueinheit (20) eine einzige Einheit bildet, die ein oberes Stoßdämpfungselement (24) und ein unteres Stoßdämpfungselement (26) enthält, und
- die Dämpfungselemente (24, 26) einer gleichen Baueinheit (20) durch mindestens eine Verbindungsplatte (22) fest miteinander verbunden sind, wobei die Verbindungsplatte einen ersten Bereich, der auf dem Ende eines oberen Trägers aufliegen kann, und einen zweiten Bereich aufweist, der auf dem Ende eines unteren Trägers aufliegen kann, der sich unter dem oberen Träger befindet.

2. Vorrichtung nach Anspruch 1, **dadurch gekennzeichnet, dass** das obere Stoßdämpfungselement (24) und das untere Stoßdämpfungselement (26) der gleichen Baueinheit (20) im Wesentlichen senkrecht übereinander gelegt sind.

3. Vorrichtung nach Anspruch 2, **dadurch gekennzeichnet, dass** die Dämpfungselemente (24, 26) an der Verbindungsplatte (22) befestigt sind.

4. Vorrichtung nach Anspruch 3, **dadurch gekennzeichnet, dass** die Dämpfungselemente (24, 26) an die Verbindungsplatte (22) geschweißt sind.

5. Vorrichtung nach Anspruch 2, **dadurch gekennzeichnet, dass** die Dämpfungselemente (24, 26) und die Verbindungsplatte (22) aus einem Stück geformt sind.

6. Vorrichtung nach Anspruch 5, **dadurch gekennzeichnet, dass** das Bauteil durch Extrudieren hergestellt wird.

7. Vorrichtung nach Anspruch 6, **dadurch gekennzeichnet, dass** das Bauteil in Form einer Tragplatte extrudiert wird, auf der mindestens zwei gemäß der Länge der Platte zueinander parallele Profilteile angeordnet sind.

8. Vorrichtung nach Anspruch 5, **dadurch gekennzeichnet, dass** das Bauteil durch Tiefziehen hergestellt wird.

9. Vorrichtung nach einem der vorhergehenden Ansprüche, **dadurch gekennzeichnet, dass** die Stoßdämpferelemente (24, 26) Profilteile insbesondere mit quadratischem Querschnitt sind.

10. Vorrichtung nach einem der vorhergehenden Ansprüche, **dadurch gekennzeichnet, dass** die Dämpfungselemente aus Stahl hergestellt sind.

11. Vorrichtung nach einem der Ansprüche 1 bis 9, **dadurch gekennzeichnet, dass** die Dämpfungselemente aus Aluminium hergestellt sind.

12. Vorrichtung nach einem der vorhergehenden Ansprüche, **dadurch gekennzeichnet, dass** ein erster Stoßstangenbalken (28) über obere Dämpfungselemente (24) an der Struktur befestigt ist, während ein zweiter Stoßstangenbalken (30) über untere Dämpfungselemente (26) an der Struktur befestigt ist.

13. Vorrichtung nach einem der Ansprüche 1 bis 11, **dadurch gekennzeichnet, dass** ein einziger Stoßstangenbalken (32) einerseits über untere Dämpfungselemente (26) und andererseits über obere Dämpfungselemente (24) an der Struktur befestigt ist.

14. Vorrichtung nach einem der vorhergehenden Ansprüche, **dadurch gekennzeichnet, dass** die Stoßdämpfungselemente (24, 26) einen abgekapselten Innenraum enthalten.

15. Vorrichtung nach einem der vorhergehenden Ansprüche, **dadurch gekennzeichnet, dass** jede Baueinheit (20) außerdem ein Zwischenstoßdämpfungselement (25) enthält, das zwischen dem oberen Stoßdämpfungselement (24) und dem unteren Stoßdämpfungselement (26) angeordnet ist.
